Europäisches Patentamt

European Patent Office

Office européen des brevets

(19)

(11) Veröffentlichungsnummer: **0 210 955
B1**

# (12) EUROPÄISCHE PATENTSCHRIFT

(45) Veröffentlichungstag der Patentschrift:
**08.11.89**

(21) Anmeldenummer: **86810338.3**

(22) Anmeldetag: **28.07.86**

(51) Int. Cl.⁴: **C 09 B 5/28**, C 07 D 209/82

(54) Verfahren zur Herstellung von Anthrimidcarbazolen.

(30) Priorität: **02.08.85 CH 3335/85**

(43) Veröffentlichungstag der Anmeldung:
**04.02.87 Patentblatt 87/6**

(45) Bekanntmachung des Hinweises auf die Patenterteilung:
**08.11.89 Patentblatt 89/45**

(84) Benannte Vertragsstaaten:
**CH DE FR GB LI**

(56) Entgegenhaltungen:
**EP-A- 0 090 278**

(73) Patentinhaber: **CIBA-GEIGY AG, Klybeckstrasse 141,
CH-4002 Basel (CH)**

(72) Erfinder: **Blattner, Rudolf, Dr., Rheinmattenweg 14,
D-7888 Rheinfelden 4 (DE)**

**Beschreibung**

Es sind bereits Verfahren zur Herstellung von Anthrimidcarbazolen durch Erhitzen der Anthrimide in Gegenwart einer Pyridinbase und AlCl₃ bekannt, z.B. aus der deutschen Patentschrift 451 495 und der deutschen Auslegeschrift 1 093 931. Diese Verfahren weisen jedoch den Nachteil auf, dass grosse Mengen von AlCl₃ benötigt werden, normalerweise ca. 1-4 Gewichtsteile AlCl₃ pro Gewichtsteil Anthrimid. Bei vorgegebener Reaktionstemperatur steht der Pyridinbedarf in festem Verhältnis zum AlCl₃-Einsatz, so dass die genannten Verfahren auch relativ grosse Mengen Pyridin erfordern.

Aus der deutschen Offenlegungsschrift 3 211 328 ist ein Verfahren zur Herstellung von 1,1';4,1'';8,1'''-Tetraanthrimid-2,2';3,2'';7,2'''-carbazol und aus der europäischen Patentanmeldung 84 315 ein Verfahren zur Herstellung von eine Nitrogruppe enthaltenden 1,1';4,1''-Trianthrimid-2,2';3,2''-carbazolen bekannt. Auch bei diesen Verfahren zur Herstellung spezieller Anthrimidcarbazole, bei denen unter Normaldruck gearbeitet wird, werden gemäss den Beispielen mindestens 0,6 Gewichtsteile AlCl₃ pro Gewichtsteil Anthrimid benötigt.

Es wurde nun gefunden, dass es günstig ist, die Carbazolierung der Anthrimide unter Druck bei einer Temperatur, die oberhalb des Siedepunktes der Reaktionsmischung bei Normaldruck liegt, durchzuführen.

Überraschenderweise benötigt man, insbesondere bei höheren Temperaturen, weniger AlCl₃ als bei der bisher üblichen Arbeitsweise, z.B. nur 0,25 Gewichtsteile pro Gewichtsteil Anthrimid und man kann ausserdem weniger Pyridinbase einsetzen, ohne dass die Reaktionsmischung unrührbar wird. Ausserdem erhält man zum Teil die Carbazole in besserer Reinheit als beim Arbeiten unter Normaldruck und die Reaktionstemperatur kann beliebig eingestellt werden. Durch Temperaturerhöhung über den Siedepunkt des Gemisches hinaus (Druckreaktion) kann damit die Reaktionszeit deutlich verkürzt werden.

Gegenstand der vorliegenden Erfindung ist ein Verfahren zur Herstellung von Anthrimidcarbazolen durch Erhitzen der Anthrimide in Gegenwart einer Pyridinbase und AlCl₃, dadurch gekennzeichnet, dass man die Reaktion unter Druck durchführt bei einer Temperatur, die oberhalb des Siedepunktes der Reaktionsmischung bei Normaldruck liegt.

Die Carbazolierung erfolgt vorzugsweise bei einer Temperatur zwischen 120 und 200°C, insbesondere zwischen 130 und 180°C und vor allem zwischen 140 und 170°C.

Als für das erfindungsgemässe Verfahren geeignete Anthrimide kommen Poly-anthrachinonylamine, z.B. Dianthrimide (Dianthrachinonyl-amine), Tri-, Tetra-, Pent-anthrimide oder Polyanthrimide in Betracht, d.h. Verbindungen, in denen Anthrachinon-Reste durch NH-Brücken verknüpft sind. Unter den Begriff «Anthrimide» fallen auch analog gebaute Umsetzungsprodukte halogenierter Polycyclen mit Aminoanthrachinonen. Geeignete Polycyclen sind z.B. Naphthalin, Benzanthron, Dibenzanthron, Fluoranthen, Chrysen, Isodibenzanthron, Pyranthron, Dibenzpyrenchinon, Acedianthron, Anthrapyrimidin, Pyrazolanthron, Isothiazolanthron, Chinazolinanthron, Azabenzanthron oder Flavanthron, sowie Phthaloylverbindungen zwei- oder mehrkerniger Kohlenwasserstoffe.

Die Anthrimide können weitere Substituenten tragen, z.B. Nitro, Amino, Halogen, C₁-C₄-Alkoxy oder vorzugsweise Benzoylamino, wobei diese Substituenten vor allem in den Anthrachinon-Resten angeordnet sind, insbesondere in 1-, 4-, 5- oder 8-Stellung.

Zur Carbazolierung kann das Anthrimid salzhaltig als 60 bis 75%iges Produkt, wie man es beim Eindampfen der Anthrimidschmelze erhält oder weitgehend salzfrei, wie man es bei der Abtrennung des Lösungsmittels durch Wasserdampfdestillation erhält oder als reine Verbindung eingesetzt werden. Die nach der Carbazolierung erhaltenen Produkte unterscheiden sich nicht im Farbton.

Im erfindungsgemässen Verfahren können auch Anthrimidgemische eingesetzt werden, z.B. Gemische, die durch Umsetzung von Chloranthrachinongemischen mit 1-Aminoanthrachinon und/oder 1,5-Diaminoanthrachinon erhalten werden.

Für das erfindungsgemässe Verfahren besonders geeignete Anthrimide sind die folgenden:

1,1'-Dianthrimid,
1,1';4,1''-Trianthrimid,
1,1';5,1''-Trianthrimid,
1,1';4',1'';4'',1'''-Tetraanthrimid,
1,1';4,1'';5,1''';8,1''''-Pentaanthrimid,

das Anthrimid aus Dibromfluoranthen oder Dibromchrysen und 1-Aminoanthrachinon, sowie die obengenannten Verbindungen, welche noch 1 oder 2 Benzoylamino-, Nitro- oder Aminogruppen in einem Anthrachinonrest aufweisen.

Das Gewichtsverhältnis AlCl₃:Anthrimid liegt vorzugsweise zwischen 0,10:1 und 0,7:1, insbesondere zwischen 0,15:1 und 0,4:1.

Als Pyridinbasen kommen z.B. Pyridin, 2-, 3- oder 4-Methylpyridin, 2-, 3- oder 4-Ethylpyridin, 2-Methyl-5-ethylpyridin oder auch Gemische dieser Verbindungen in Frage. Bevorzugt sind die genannten Methylpyridine sowie insbesondere Pyridin selbst.

Die Pyridinbase wird normalerweise in solcher Menge zugesetzt, dass die Reaktionsmischung gut rührbar bleibt. Vorzugsweise verwendet man 1 bis 10 Gewichtsteile Pyridinbase pro Gewichtsteil AlCl₃ + Anthrimid.

Die Carbazolierung wird vorteilhaft so durchgeführt, dass man zunächst eine Schmelze bzw. Lösung aus AlCl₃ und Pyridinbase bei erhöhter Temperatur herstellt und dann das Anthrimid, z.B. in fester Form oder als Suspension in der Pyridinbase zugibt. Dann verschliesst man das Reaktionsgefäss und heizt auf eine Temperatur auf, die oberhalb des Siedepunktes der Reaktionsmischung bei Normaldruck liegt. Nach Beendigung der Reaktion können die Anthrimidcarbazole in der üblichen Weise aufgearbeitet werden, z.B. durch Austragen auf verdünnte Natronlauge, Wasserdampfdestillation zur Entfernung der Pyridinbase und anschliessendes Filtrieren und Trocknen des Rückstandes.

Die Carbazolierung kann auch in einer kontinuierlich arbeitenden Apparatur durchgeführt werden, z.B. in einem geeigneten Rohrreaktor, in einem kontinuierlich arbeitenden Rührkessel (Durchflussrührkessel) oder in einem Dünnschichtreaktor.

Die erhaltenen Anthrimidcarbazole können gegebenenfalls in bekannter Weise einer oxidativen Nachbehandlung unterworfen werden und eignen sich zur Verwendung als Küpenfarbstoffe nach den üblichen Färbeverfahren.

In den folgenden Beispielen bedeuten die Teile Gewichtsteile und die Temperaturen sind in Grad Celsius angegeben.

*Beispiel 1*

In einen Autoklav füllt man 400 ml wasserfreies Pyridin und trägt dann bei 50-100°C 140 g Aluminiumchlorid ein. Man heizt auf 115°C auf und gibt dann innerhalb von 20 Minuten bei dieser Temperatur eine Suspension von 240 g 1,1;4,1''-Trianthrimid [1,4-Bis-(1-anthrachinonyl-amino)-anthrachinon] in 350 g Pyridin zu. Anschliessend wird der Autoklav verschlossen und die Reaktionsmischung auf 140°C aufgeheizt (Druck ca. 2 Bar). Nach einer Reaktionszeit von 4 Stunden bei dieser Temperatur wird auf 115°C abgekühlt und das Reaktionsgemisch unter Stickstoffdruck auf 3000 g 15%ige Natronlauge ausgetragen und das Pyridin durch Direktdampfdestillation im Gemisch mit Wasser aus der Reaktionsmasse entfernt.

Die so erhaltene Suspension wird filtriert, der Rückstand wird neutral gewaschen und getrocknet. Man erhält in nahezu quantitativer Ausbeute einen Farbstoff, welcher Baumwolle und regenerierte Cellulose aus der alkalischen Hydrosulfitküpe in reinen rotstichig braunen Tönen mit ausgezeichneten Echtheiten anfärbt.

*Beispiel 2*

Man arbeitet wie im Beispiel 1, verwendet jedoch die Gesamtmenge Pyridin zur Herstellung der AlCl₃-Pyridin-Schmelze und trägt das Trianthrimid als Pulver ein. Die weitere Reaktion und die Aufarbeitung erfolgen wie im Beispiel 1. Man erhält denselben Farbstoff mit gleicher Ausbeute.

*Beispiel 3*

Man arbeitet wie im Beispiel 1, verwendet jedoch anstelle von 240 g Trianthrimid 315 g Trianthrimid, enthaltend 75 g Salze (hauptsächlich NaCl und Na₂CO₃) wie es nach der Synthese aus 1-Chloranthrachinon und 1,4-Diaminoanthrachinon anfällt. Die weitere Reaktion und die Aufarbeitung erfolgen wie im Beispiel 1. Man erhält denselben Farbstoff mit ungefähr gleicher Ausbeute, bezogen auf salzfreies Anthrimid.

*Beispiel 4*

In einen Autoklav füllt man 400 ml wasserfreies Pyridin und trägt dann bei 50-100°C 100 g Aluminiumchlorid ein. Man heizt auf 115°C auf und gibt dann innerhalb von 20 Minuten bei dieser Temperatur eine Suspension von 240 g Trianthrimid [1,4-Bis-(1-anthrachinonyl-amino)-anthrachinon] in 350 g Pyridin zu, welche mit einem geeigneten Dispergiergerät (z.B. Ultra-Turax oder Glasperlmühle) im Durchlauf feindispergiert wurde. Anschliessend wird der Autoklav verschlossen und die Reaktionsmischung auf 150°C aufgeheizt (Druck ca. 3 Bar). Nach einer Reaktionszeit von 2 Stunden bei dieser Temperatur wird auf 115°C abgekühlt und das Reaktionsgemisch wie im Beispiel 1 beschrieben aufgearbeitet. Man erhält denselben Farbstoff mit etwa gleicher Ausbeute.

*Beispiel 5*

Man arbeitet wie im Beispiel 4, trägt jedoch das Anthrimid als Pulver ein und spart somit die 350 g Pyridin ein. Die weitere Reaktion und die Aufarbeitung erfolgen wie im Beispiel 4 beschrieben. Man erhält denselben Farbstoff mit ungefähr gleicher Ausbeute.

*Beispiel 6*

In einen Autoklav füllt man 400 ml wasserfreies Pyridin und trägt dann bei 50-100°C 140 g Aluminiumchlorid ein. Man heizt auf 115°C auf und gibt dann innerhalb von 60 Minuten bei dieser Temperatur eine Suspension von 250 g des im Beispiel 3 beschriebenen, salzhaltigen Trianthrimids in 350 g Pyridin zu. Anschliessend wird der Autoklav verschlossen und die Reaktionsmischung auf 170°C aufgeheizt (Druck ca. 5-6 Bar). Nach einer Reaktionszeit von 30 Minuten bei dieser Temperatur wird auf 115°C abgekühlt und das Reaktionsgemisch wie im Beispiel 1 beschrieben aufgearbeitet. Man erhält denselben Farbstoff mit etwa gleicher Ausbeute.

*Beispiel 7*

Man arbeitet wie im Beispiel 1 oder 3 beschrieben, setzt jedoch anstelle von 240 g Trianthrimid die gleiche Menge eines Anthrimid-Isomerengemisches ein, hergestellt durch Umsetzung von 10 Teilen 1,4-Diaminoanthrachinon mit 13,5 Teilen 1-Chloranthrachinon und 6,2 Teilen 1,5-Dichloranthrachinon. Die weitere Reaktion und die Aufarbeitung erfolgen wie im Beispiel 1 oder 3.

Man erhält in nahezu quantitativer Ausbeute einen Farbstoff, welcher Baumwolle und regenerierte Cellulose aus der alkalischen Hydrosulfitküpe in reinen rotbraunen Tönen mit ausgezeichneten Echtheiten anfärbt.

*Beispiel 8*

Man arbeitet wie im Beispiel 1 beschrieben, setzt jedoch anstelle von 240 g Trianthrimid die gleiche Menge eines Anthrimid-Isomerengemisches ein, hergestellt durch Umsetzung von 10 Teilen 1,5-Dichloranthrachinon und 2 Teilen 1-Chloranthrachinon mit 13,5 Teilen 1-Aminoanthrachinon und 2,4 Teilen 1,5-Diaminoanthrachinon. Die Reaktionstemperatur beträgt 150°C (Druck ca. 3 Bar) und die Reaktionsdauer bei dieser Temperatur 2 Stunden. Die Aufarbeitung erfolgt wie im Beispiel 1 beschrieben.

Man erhält in nahezu quantitativer Ausbeute einen Farbstoff, welcher Baumwolle und regenerierte Cellulose aus der alkalischen Hydrosulfitküpe in reinen gelbbraunen Tönen mit ausgezeichneten Echtheiten anfärbt.

*Beispiel 9 (Vergleichsbeispiel)*

In einen Rührwerkskessel füllt man 400 ml wasserfreies Pyridin und trägt dann bei 50-100°C 140 g Aluminiumchlorid ein. Man heizt auf 115°C auf und gibt dann innerhalb von 60 Minuten bei dieser Temperatur eine Suspension von 240 g Trianthrimid [1,4-Bis-(1-anthrachinonyl-amino)-anthrachinon] in 350 g Pyridin zu. Anschliessend wird die Reaktionsmischung aufgeheizt, wobei Pyridin abdestilliert und der Siedepunkt steigt. Ab ca. 135°C wird die Reaktionsmasse praktisch nicht mehr rührbar, so dass die Reaktionstemperatur nicht weiter gesteigert werden kann. Arbeitet man nach 2 Stunden Reaktionszeit wie üblich auf, so erhält man einen Farbstoff mit deutlich geringerer Farbstärke und erheblich trüberer Nuance, verglichen mit dem gemäss den Beispielen 1 - 6 erhaltenen Farbstoff.

Verwendet man anstelle von Trianthrimid das im Beispiel 3 beschriebene salzhaltige Trianthrimid, so kann die Reaktionstemperatur aus dem gleichen Grunde nicht über ca. 130°C gesteigert werden.

Um beim Arbeiten ohne Druck wie in den beiden vorstehenden Vergleichsbeispielen zu gleich guten Farbstoffen wie in den Beispielen 1 und 3 zu gelangen, ist der Einsatz einer erheblich grösseren Menge an AlCl₃ (ca. doppelte Menge) erforderlich.

**Patentansprüche**

1. Verfahren zur Herstellung von Anthrimidcarbazolen durch Erhitzen der Anthrimide in Gegenwart einer Pyridinbase und AlCl₃, dadurch gekennzeichnet, dass man die Reaktion unter Druck durchführt bei einer Temperatur, die oberhalb des Siedepunktes der Reaktionsmischung bei Normaldruck liegt.

2. Verfahren gemäss Anspruch 1, dadurch gekennzeichnet, dass man bei einer Temperatur zwischen 120 und 200°C, vorzugsweise zwischen 130 und 180°C, insbesondere zwischen 140 und 170°C arbeitet.

3. Verfahren gemäss einem der Ansprüche 1 oder 2, dadurch gekennzeichnet, dass das Gewichtsverhältnis AlCl₃:Anthrimid zwischen 0,10:1 und 0,7:1 insbesondere zwischen 0,15:1 und 0,4:1 liegt.

4. Verfahren gemäss einem der Ansprüche 1 bis 3, dadurch gekennzeichnet, dass man als Pyridinbase 2-, 3- oder 4-Methylpyridin oder deren Gemische oder vorzugsweise Pyridin verwendet.

5. Verfahren gemäss einem der Ansprüche 1 bis 4, dadurch gekennzeichnet, dass das Gewichtsverhältnis von Pyridinbase:AlCl₃ + Anthrimid zwischen 1:1 und 10:1 liegt.

6. Verfahren gemäss einem der Ansprüche 1 bis 5, dadurch gekennzeichnet, dass man als Anthrimid ein Poly-anthrachinonylamin oder ein Umsetzungsprodukt eines halogenierten Polycyclus mit Aminoanthrachinon verwendet.

7. Verfahren gemäss Anspruch 6, dadurch gekennzeichnet, dass man Di-, Tri-, Tetra- oder Pentantrimid oder ein Umsetzungsprodukt eines halogenierten Polycyclus aus der Gruppe Naphthalin, Benzanthron, Dibenzanthron, Fluoranthen, Chrysen, Isodibenzanthron, Pyranthron, Dibenzpyrenchinon, Acedianthron, Anthrapyrimidin, Pyrazolanthron, Isothiazolanthron, Chinazolinanthron, Azabenzanthron oder Flavanthron, sowie Phthaloylverbindungen zwei- oder mehrkerniger Kohlenwasserstoffe mit Aminoanthrachinon verwendet, wobei die Anthrimide durch Nitro, Amino, Halogen, C₁-C₄-Alkoxy oder Benzoylamino substituiert sein können.

8. Verfahren gemäss Anspruch 7, dadurch gekennzeichnet, dass man

   1,1'-Dianthrimid,
   1,1';4,1''-Trianthrimid,
   1,1';5,1''-Trianthrimid,
   1,1';4',1'';4'',1'''-Tetraanthrimid,
   1,1';4,1'';5,1''';8,1''''-Pentaanthrimid,

das Anthrimid aus Dibromfluoranthen oder Dibromchrysen und 1-Aminoanthrachinon oder eine der obengenannten Verbindungen, welche noch 1 oder 2 Benzoylamino-, Nitro- oder Aminogruppen in einem Anthrachinonrest aufweisen, verwendet.

9. Die nach einem der Verfahren gemäss den Ansprüchen 1 bis 8 erhältlichen Anthrimidcarbazole.

**Claims**

1. A process for the preparation of an anthrimidecarbazole by heating an anthrimide in the presence of a pyridine base and AlCl₃, which process comprises carrying out the reaction under pressure at a temperature which is above the boiling point of the reaction mixture under normal pressure.

2. A process according to claim 1 which is carried out at a temperature between 120 and 200°C, preferably between 130 and 180°C, especially between 140 and 170°C.

3. A process according to either claim 1 or claim 2, wherein the weight ratio of AlCl₃:anthrimide is between 0.10:1 and 0.7:1, especially between 0.15:1 and 0.4:1.

4. A process according to any one of claims 1 to 3, wherein the pyridine base is 2, 3- or 4-methylpyridine or a mixture thereof or, preferably, pyridine.

5. A process according to any one of claims 1 to 4, wherein the weight ratio of pyridine base to AlCl₃ + anthrimide is between 1:1 and 10:1.

6. A process according to any one of claims 1 to 5, wherein the anthrimide employed is a polyanthraquinonylamine or a reaction product of a halogenated polycyclic compound with aminoanthraquinone.

7. A process according to claim 6, which comprises the use of a di-, tri- tetra- or pentaanthrimide or a reaction product of a halogenated polycyclic compound selected from the group consisting of naphthalene, benzanthrone, dibenzanthrone, fluoranthene, chrysene, isodibenzanthrone, pyranthrone, dibenzpyrenequinone, acedianthrone, anthrapyrimidine, pyrazolanthrone, isothiazolanthrone, quinazolinanthrone, azabenzanthrone or flavanthrone, and phthaloyl compounds of binuclear or polynuclear hydrocarbons with aminoanthraquinone, which anthrimides may be substituted by nitro, amino, halogen, C₁-C₄alkoxy or benzoylamino.

8. A process according to claim 7, which com-

7 EP 0 210 955 B1 8

prises the use of

1,1'-dianthrimide,
1,1';4,1''-trianthrimide,
1,1';5,1''-trianthrimide,
1,1';4',1'';4'',1'''-tetraanthrimide,
1,1';4,1'';5,1''';8,1''''-pentaanthrimide,

the anthrimide obtained from dibromofluoranthene or dibromochrysene and 1-aminoanthraquinone, or one of the abovementioned compounds which additionally contain 1 or 2 benzoylamino, nitro or amino groups in an anthraquinone radical.

9. An anthrimidecarbazole obtainable by a process according to any one of claims 1 to 8.

**Revendications**

1. Procédé de préparation d'anthrimidecarbazoles par chauffage de l'anthrimide en présence d'une base pyridinique et de AlCl₃, caractérisé par le fait que la réaction est mise en oeuvre sous pression, à une température qui se trouve au-dessus de la température d'ébullition du mélange réactionnel à la pression normale.

2. Procédé selon la revendication 1, caractérisé par le fait qu'on travaille à une température comprise entre 120 et 200°C, et de préférence entre 130 et 180°C, et en particulier entre 140 et 170°C.

3. Procédé selon la revendication 1 ou 2, caractérisé par le fait que le rapport en poids AlCl₃:anthrimide est compris entre 0,10:1 et 0,7:1 et en particulier entre 0,15:1 et 0,4:1.

4. Procédé selon l'une des revendications 1 à 3, caractérisé par le fait qu'on utilise comme base pyridinique la 2-, 3- ou la 4-méthylpyridine ou leurs mélanges ou de préférence la pyridine.

5. Procédé selon l'une des revendications 1 à 4, caractérisé par le fait que le rapport en poids de base pyridinique:AlCl₃ + anthrimide est compris entre 1:1 et 10:1.

6. Procédé selon l'une des revendications 1 à 5, caractérisé par le fait qu'on utilise comme anthrimide une poly-anthraquinonylamine ou un produit de réaction d'un polycycle halogéné avec l'amino-anthraquinone.

7. Procédé selon la revendication 6, caractérisé par le fait qu'on utilise un di-, tri-, tétra- ou penta-anthrimide ou un produit de réaction d'un polycycle halogéné choisi dans le groupe formé par le naphtalène, le benzanthrone, le dibenzanthrone, le fluoroanthène, le chrysène, l'isodibenzanthrone, la pyranthrone, la dibenzopyrenquinone, l'acédianthrone, l'anthrapyrimidine, la pyrazolanthrone, l'isothiazolanthrone, la quinazolinanthrone, l'azabenzanthrone ou la flavanthrone ainsi que les composés phtaloyle hydrocarbures à deux ou trois noyaux avec l'amino-anthraquinone où l'anthrimide peut être substitué par nitro, amino, halogène, alcoxy en C₁-C₄ ou par benzoylamino.

8. Procédé selon la revendication 7, caractérisé par le fait qu'on utilise:

la 1,1'-dianthrimide,
la 1,1';4,1''-trianthrimide,
la 1,1';5,1''-trianthrimide,
la 1,1';4',1'';4'',1'''-tétra-anthrimide
la 1,1';4,1'';5,1''';8,1''''-penta-anthrimide,

anthrimide à partir du dibromofluoranthène ou dibromochrysène et la 1-amino-anthraquinone ou bien un des composés précités comportant encore 1 ou 2 groupes benzoylamino-, nitro- ou amino dans un reste d'anthraquinone.

9. Anthriminecarbazole pouvant être obtenu par un procédé selon l'une des revendications 1 à 8.

5